# EUROPEAN PATENT APPLICATION

(11) **EP 1 362 715 A2**
(43) Date of publication of application: **19.11.2003**
(21) Application number: 03010172.9
(22) Date of filing: 06.05.2003
(51) Int. Cl.: B60B 17/00

(54) **Resilient wheel for rail**

(30) Priority: 14.05.2002 IT BG20020019
(71) Applicant: Lucchini Sidermeccanica S.p.A., 25127 Brescia (IT)
(72) Inventor: Benuzzi, Daniele, 25127 Brescia (IT)
(74) Representative: Lecce, Giovanni

(57) **Abstract**

A resilient wheel (10) for rail, particularly suitable for trams and metro lines comprising a rim (12) extending on the internal face in a shaped edge (14), a centre wheel (16) with an upper extension forming an annular portion (18'), a ring (18) fastened to said centre wheel by screws (20) and resilient means (30); the rim (12) is provided with an integral appendix (22) that extends towards the wheel centre (16) and forms a radial flange on at least one side of which said resilient means (30) are fastened.

## Description

The present invention refers to a resilient wheel for rail.

More particularly, the present invention refers to a resilient wheel that is particularly suitable for trams and metro lines in order to reduce the acoustic emissions, the non-suspended masses and the radial stiffness of the same wheel.

It is known that the rail vehicles emit high levels of noise caused by the contact of the wheels with the rails and the latter are subject to considerable compressive and tangential stresses.

For these reasons, different types of wheels with ring, disk or plate-shaped resilient elements constituted by rubber or elastomeric pieces have been designed. In some known embodiments, the rubber plates are placed in a parallel way among them, between the hub and the tread or they are placed to the sides of the flare and are fastened to the hub with flanges. The wheels thus formed are difficult to assemble and the resilient elements are submitted to strong tensions and stresses that cause a quick deterioration.

Moreover, said wheels show drawbacks related to radial and axial stiffness deriving not only from the fact that the resilient elements and the possible metal bodies associated to them move in the same wheels during the running, but particularly because said resilient elements are subject to compression.

Moreover, in said known embodiments the stiffness values of the system in its whole are fix and strictly connected to the diameter or the width of the rim or of the hub of the wheel.

Object of the present invention is to solve the above-mentioned drawbacks.

More particularly, object of the present invention is to provide a resilient wheel for rail wherein the resilient elements keep their function in a steady way and for a long period of time even in presence of tensions and stresses they are forcedly submitted to during the use.

A further object of the present invention is to provide a resilient wheel for rail wherein the stiffness values of the system in its whole are not connected to the diameter or the width of the rim or of the hub of the heel.

Another object of the present invention is to provide a resilient wheel for rail wherein the resilient elements are steadily kept during the running and are not submitted to compression.

A further object of the invention is to provide a resilient wheel for rail wherein said resilient elements can be easily assembled to one part or component of the wheel.

A further object of the invention is to provide a resilient wheel for rail that guarantees a high resistance and a reliability level in time and it is easily manufactured and at a low cost.

According to the present invention, these and other objects will be reached by a resilient wheel for rail comprising a rim extending on the internal face in a shaped edge, a wheel centre and at least one ring fastened to said wheel centre with screws and resilient means wherein the rim is provided with an integral appendix extending towards the wheel centre and forming a radial flange on at least one side face of which said resilient means are fastened.

The building and functional features of the resilient wheel for rail of the present invention will be better understood from the following description wherein reference is made to the table of the enclosed drawings representing a preferred and non-limitative embodiment wherein:
- Figure 1 is a schematic view of the partial longitudinal section of the resilient wheel for rail of the present invention; and
- Figure 2 is an enlarged schematic view of a part of the same resilient wheel for rail of Figure 1.

With reference to the above-mentioned figures, the resilient wheel for rail of the present invention, marked in its whole with 10, comprises a rim 12 extended on the internal face in a guiding shaped edge 14 on the rail; a wheel centre 16 and a locking ring 18 fastened to said wheel centre 16 with common screws 20. The rim 12 on the internal face facing the shaped edge 14, is provided with an integral appendix 22 which is developed along the longitudinal axis whose section is substantially quadrangular. Said appendix 22 extends towards the wheel centre 16 and defines a radial flange whose width and radial extension sizes are for example comprised between 15 and 35 mms and 25 and 40 mms. The opposite side faces of the appendix 22, that are extended in an annular way, constitute the same number of shoulders for the positioning and the stabilization of the resilient means the wheel 10 is provided with.

Said resilient means are preferably constituted by at least one pack or sandwich 30 of annular bodies made of heterogeneous materials and inseparably fastened among them. In particular, the pack or sandwich 30 of annular bodies that matches with at least one side face of the appendix 22, is constituted by metal rings 24 that alternate with rings 26 made of elastomeric material that are vulcanised among them. The elastomeric material rings 26 are exposed on the opposite side of the sandwich 30 and they respectively match with metal parts of the wheel 10.

On the internal side facing the appendix 22, one of the rings 26 of the sandwich 30 made of elastomeric material matches with the same appendix 22 or radial flange; while on the opposite side or external side a similar ring 26 made of elastomeric material matches with a metal annular plate 32. Said annular plate 32 is matched with usual screws 34 or similar fastening means to an upper extension 18' of the wheel centre 16 forming an annular locking portion. Said extension 18' is similar to the ring 18 and it substantially mirrors it.

The pack or sandwich 30 is embodied to the wheel 10 by vulcanisation that determines its fastening to the appendix 22, to the ring 18, to said extension 18' of the wheel centre 16, to the annular plate 32 and, if necessary, to a further annular plate which is also present in correspondence with the ring 18 in order to form one integrated compact unit.

In the preferred embodiment of the Figures, a sandwich 30 is associated to each of the opposite faces of the appendix 22. Said sandwich 30 is delimited and fastened to the external face opposite to the edge 14, to the extension of the wheel centre 16 forming the locking ring 18; while, on the opposite side, said sandwich 30 is integral to the internal wall 36 of the locking ring 18. Said internal wall 36 is vertical and parallel to the shoulders of the appendix 22.

The placement of an annular plate that is similar or identical to one marked with 32 even on said opposite side facing the ring 18 should be also taken into consideration as an alternative.

The number of metal rings 24 and of the ones made of elastomeric material 26 forming each of the sandwiches 30 can change as well as their thickness and their diameter can change according to the size of the wheel 10 and the stiffness features the wheel is required. In order to increase or decrease said stiffness the opportunity to carry out the axial precompression of the rings 26 made of elastomeric material and/or the inclination with respect to the horizontal axis of one or both sandwiches 30 by known means should be also contemplated. The connection among the latter and the wheel 10 implies different times according to the elastomeric material that has been used and the cross-linking level to be obtained. The used elastomeric material is preferably of the type known as EPDM.

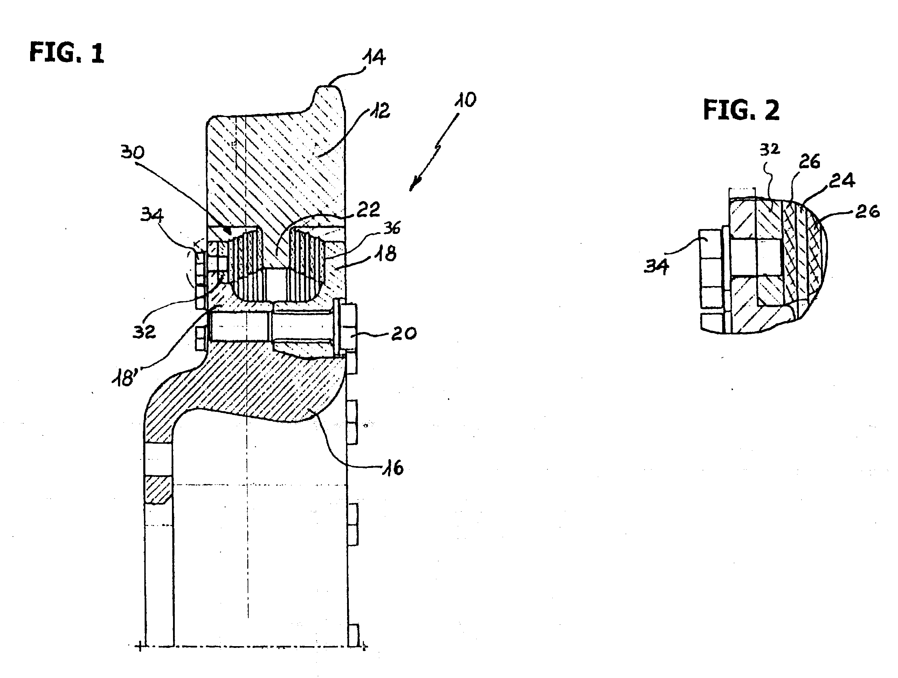

The use of compounds of elastomeric materials with different cross-linking levels allows obtaining a broad range of different compliance/resistance connections according to the functional features required to the wheel 10. According to the embodiment of Figure 1, the sandwiches 30 associated to the appendix 22 on the opposite shoulders are symmetrical, but it is understood that this symmetrical configuration is given by way of example and therefore it can also be an asymmetrical one.

As it can be noticed from the above-mentioned description, the advantages of the invention are clear.

The resilient wheel for rail of the present invention allows reducing the acoustic emissions and at the same time it gives the wheel 10 optimum radial and axial stiffness features. The resilient means constituted by sandwiches 30 of metal rings 24 that alternate to rings 26 made of elastomeric material are accurately and constantly stabilized on the wheel 10 as they are fastened by vulcanisation in order to substantially form an integrated compact unit and they are not to submitted to compression as they are subject to shearing stress.

With the required diameter and thickness sizing, said sandwich-coupled rings 24 and 26 that are fastened between them by vulcanisation adapt to any diameter and width of the rim or of the hub of the wheel 10 to which they can be easily embodied with one vulcanisation operation.

Even though the present invention has been described and illustrated here with reference to an embodiment, which is given only by way of non-limitative example, various changes and variants can be made by a technician skilled in the art according to the above-mentioned description. It is therefore understood that the present invention is meant to include all the changes and variants falling within the spirit and the protective scope of the following claims.

## Claims

1. A resilient wheel (10) for rail, particularly suitable for trams and metro lines comprising: a rim (12) extending on the internal face in a shaped edge (14), a wheel centre (16) with an upper extension forming an annular portion (18') and a ring (18) which is fastened to said wheel centre, **characterized by** the fact that the rim (12) is provided with an integral appendix (22) extending towards the wheel centre (16) and forming a radial flange and that resilient means are fastened on at least one side face of said radial flange.

2. The resilient wheel according to claim 1, **characterized by** the fact that the resilient means are constituted by a pack or sandwich (30) of metal rings (24) that alternate to rings (26) made of elastomeric material and are fastened among them and to said at least one side face of the appendix (22) by vulcanisation.

3. The resilient wheel according to claims 1 or 2, **characterized by** the fact that the pack or sandwich (30) that constitutes said resilient means is fastened by vulcanisation on the side facing the appendix (22), to an annular plate (32) being integral to the wheel centre (16) with screws (34), to the ring (18) and/or to the upper extension (18') of said wheel centre.

4. The resilient wheel according to any of the previous claims, **characterized by** the fact that said resilient means constituted by a sandwich (30) of metal rings (24) that alternate to elastomeric rings (26) are fastened to each of the side faces of the appendix (22).

5. The resilient wheel according to any of the previous claims, **characterized by** the fact that the appendix (22) of the rim (12) extends in an annular way and develops along the longitudinal axis of the same rim having a quadrangular section.

6. The resilient wheel according to claim 5, **characterized by** the fact that the length and the radial extension sizes of said appendix (22) are respectively comprised between 15 and 35 mms and between 25 and 40 mms.

7. The resilient wheel according to any of the previous claims, **characterized by** the fact that the rings (26) made of elastomeric material are exposed on the opposite sides of the resilience means formed by said sandwiches (30).

8. The resilient wheel according to any of the previous claims, **characterized by** the fact that the elastomeric material forming the rings (26) is constituted by EPDM.

9. The resilient wheel according to any of previous claims from 1 to 7, **characterized by** the fact that the elastomeric material is a compound of elastomers having a different cross-link level.

10. The resilient wheel according to any of the previous claims, **characterized by** the fact that the stiffness of the resilient means is changed by changing the inclination with respect to the horizontal axis of one or both sandwiches (30).
